# EUROPÄISCHE PATENTSCHRIFT

(11) **EP 1 145 880 B1**
(45) Veröffentlichungstag und Bekanntmachung des Hinweises auf die Patenterteilung: **12.12.2007**
(21) Anmeldenummer: 01107997.7
(22) Anmeldetag: 29.03.2001
(51) Int. Cl.: B60G 21/055

(54) **Lagerung für einen Stabilisator einer Radaufhängung für Kraftfahrzeuge**
Bearing for a stabiliser bar of a wheel suspension for a motor vehicle
Support pour une barre stabilisatrice d'une suspension de roue d'un véhicule automobile

(30) Priorität: 15.04.2000 DE 10018776
(43) Veröffentlichungstag der Anmeldung: 17.10.2001
(73) Patentinhaber: Dr.Ing. h.c. F. Porsche Aktiengesellschaft, 70435 Stuttgart (DE)
(72) Erfinder: Wiesemann, Stefan, 73732 Esslingen (DE); Schote, Norbert, 72119 Ammerbuch (DE)

(56) Entgegenhaltungen:
- EP-A- 0 384 799
- DE-A- 19 912 268
- DE-C- 3 904 833
- GB-A- 1 028 729
- GB-A- 2 021 053

## Beschreibung

Die Erfindung bezieht sich auf ein Lager für einen Stabilisator einer Radaufhängung für Kraftfahrzeuge nach dem Oberbegriff des Anspruchs 1. Ein solches Lager ist aus EP-A-0 384 799 bekannt.

Aus der DE 39 04 833 C1 ist ein Lager für einen Stabilisator einer Radaufhängung für Kraftfahrzeuge bekannt, das am Stabilisator einen Führungsring aufweist, der von einem elastischen Lagerkörper übergriffen wird. Dieser ist mit dem Fahrzeug aufbaufest verbunden und bewirkt im Zusammenhang mit dem Führungsring eine exakte Führung des Stabilisators in Querrichtung. Desweiteren ist aus der DE 28 17 712 A1 ein Verbindungselement für einen Stabilisator zur Wankstabilisierung bekannt, das zwei miteinander über eine Verzahnung verbundene Hülsen umfaßt, die jeweils an den zu verbindenden Stabilisatorenden befestigt sind.

Aufgabe der Erfindung ist es, ein Lager für einen Stabilisator einer Radaufhängung zu schaffen, das verschmutzungsresistent und geräuschfrei ist und ferner eine einfache Montage auf dem Stabilisator ermöglicht.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch eine drehfeste Verbindung des Stabilisators mit dem Lagerelement mittels Rastelemente Relativbewegungen zwischen dem Stabilisator und Gleitflächen des Lagerelements vermieden werden und somit keine Quietschgeräusche auftreten können.

Eine drehfeste Verbindung wird nach der Erfindung dadurch erzielt, daß die Innenhülse einen freien vorstehenden Hülsenabschnitt mit einer polygonalen Innenform als erstes Rastelement aufweist, das einen mit dem Stabilisator verbundenen Ring übergreift, der eine polygonale Außenform als zweites Rastelement besitzt. Die Rastelemente können nach der Erfindung aus miteinander korrespondierenden Vielzahnprofilen oder Mehrkantprofilen bestehen. Hierdurch wird in einfacher Weise nach der Erfindung ein Formschluß zwischen dem Stabilisator und dem Lagerelement hergestellt. Als Außenkontur können alle Konturen zur Anwendung kommen, die geeignet sind, Momente zu übertragen wie beispielsweise Vielzahnprofile, Zweikant-, Sechskant- oder Achtkantprofile. Dabei ist es ohne Belang, ob der Ring auf dem Stabilisator aufgepreßt ist oder ob es sich dabei um einen aufgespritzten Kunststoffring handelt.

Eine Verdrehung des Stabilisators wird insbesondere durch ein elastisches Ringelement zwischen der Innenhülse und der Außenhülse des Lagerelements ermöglicht. Dieses Ringelement ist beispielsweise an die Innen- und Außenhülse anvulkanisiert.

Die Außenhülse ist erfindungsgemäß fest mit dem Fahrzeugaufbau bzw. einer Karosserie bzw. einem Fahrschemel verbunden. Zur einfachen Montage besteht die Außenhülse und/oder die Innenhülse aus zwei Schalen wobei die Innenhülse Abstellungen aufweist, über die eine Befestigung erfolgt.

Das elastische Ringelement zwischen den Hülsen bewirkt einen definierten Abstand und erlaubt ein verdrehweiches und gleichzeitig radial steifes Lager.

Zum Toleranzausgleich kann erfindungsgemäß zwischen der Innenhülse und dem Stabilisator eine Gummischicht oder eine gleich wirkende Schicht vorgesehen sein.

Aus Ausführungsbeispiel der Erfindung ist in den Zeichnungen dargestellt und wird im Folgenden näher beschrieben.

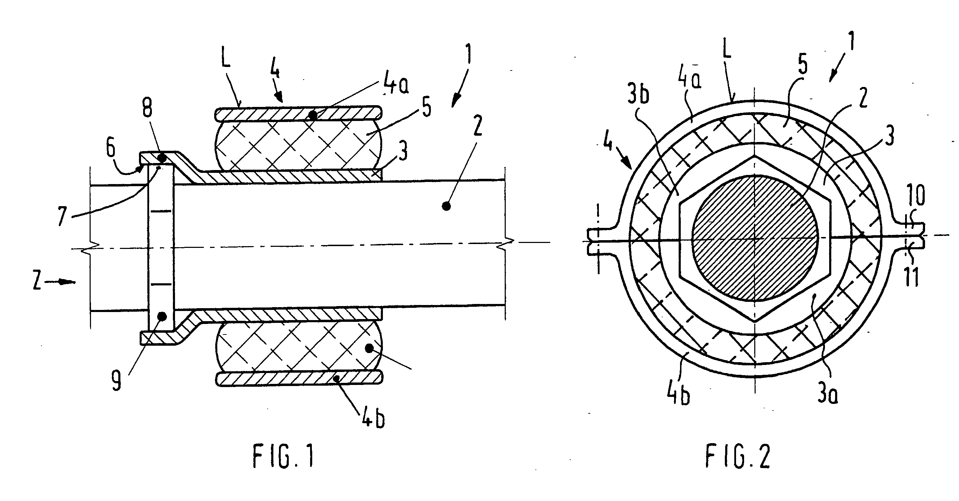

Es zeigen
- Fig. 1: eine Vorderansicht des Lagerelements im Schnitt und
- Fig. 2: eine Ansicht auf den Stabilisator mit Lagerelement in Pfeilrichtung Z der Fig. 1 gesehen.

Ein Lager 1 für einen Stabilisator 2 umfaßt im Wesentlichen ein Lagerelement L, bestehend aus einer Innenhülse 3, einer Außenhülse 4 und einem zwischen den Hülsen 3 und 4 angeordneten elastischen Ringelement 5. Über miteinander korrespondierende Rastelemente 6, 7 an der Innenhülse 3 und am Stabilisator 2 wird eine drehfeste Verbindung zwischen dem Lagerelement L und dem Stabilisator 2 erzielt.

Hierzu weist die Innenhülse 3 an mindestens einem freien Ende 8 eine innere polygonale Innenform als Rastelement 6 auf. Diese kann aus einer Verzahnung oder einem Mehrkant bestehen. Diese Innenform (Rastelement 6) übergreift einen Ring 9, der mit dem Stabilisator 2 fest verbunden ist. Der Außenrand dieses Ringes 9 ist mit dem weiteren Rastelement 7 versehen, das aus einer polygonalen Außenform besteht, die korrespondierend mit der Innenform der Innenhülse 3 ausgeführt ist.

Durch dieses Ineinandergreifen der beiden Rastelemente 6 und 7 der Innenhülse 3 und des Ringes 9 wird eine sichere drehfeste Verbindung zwischen dem Lagerelement L bzw. dem Lager 1 und dem Stabilisator 2 hergestellt. Statt des Ringes 9 kann der Stabilisator 2 auch eine entsprechende Außenform mit Rastelementen 7 aufweisen.

Das elastische Element 5 zwischen den Hülsen 3 und 4 kann mit diesen durch Vulkanisation oder in sonstiger Weise verbunden sein. Es erstreckt sich über eine Teillänge der Innenhülse 3 und das freie Ende 8 der Innenhülse 3 ist freiliegend und weist das Rastelement 6 auf. Das elastische Element 5 ermöglicht eine Verdrehung bzw. Torsionsbewegung des Stabilisators 2 bei Federungsvorgängen des Fahrzeugs.

Die Außenhülse 4 kann aus wenigstens zwei Schalen 4a und 4b, die jeweils Abstellungen 10 und 11 aufweisen, über die eine Verbindung des Lagerelements L erfolgt.

Die Innenfläche der Innenhülse 3 umgibt den Stabilisator 2 und ist mit diesem nicht verbunden. Es kann zwischen der Innenfläche und dem Stabilisator 2 eine Zwischenschicht beispielsweise aus Gummi oder dergleichen Schicht vorgesehen sein, damit Toleranzen ausgeglichen werden können und äußere Einflüsse, wie Wasser usw. nicht zwischen diese Innenfläche und den Stabilisator eintreten kann.

Der Ring 9 kann aus Kunststoff oder aus Metall bestehen und durch Aufspritzen oder durch Aufpressen mit dem Stabilisator 2 verbunden werden.

Die Innenhülse 3 kann erfindungsgemäß ebenfalls wie die Außenhülse 4 mehrschalig beispielsweise zweischalig (Schale 3a, 3b) ausgeführt sein, damit die Montage auf dem Stabilisator 2 vereinfacht wird. Die Montage des Lagers 1 auf die Scheibe 9 erfolgt in einfacher Weise durch ein Überstecken auf die Scheibe 9 oder bei zwei Schalen 3a und 3b durch ein entsprechendes Überlegen, so daß die Rastelemente 6, 7 der Innenhülse 3 mit dem Rastelement 7 des Ringes 9 miteinander in Eingriff bringbar sind.

## Patentansprüche

1. Stabilisatorlager für eine Radaufhängung für Kraftfahrzeuge, mit einem den Stabilisator an einer Lagerstelle umfassenden elastischen Lagerelement, das mit einem Fahrzeugaufbauteil fest verbunden ist, wobei das elastische Lagerelement (L) mit einer Innenhülse (3) auf dem Stabilisator (2) angeordnet ist, **dadurch gekennzeichnet, daß** über miteinander korrespondierende Rastelemente (6, 7) zwischen der Innenhülse (3) und dem Stabilisator (2) das Lagerelement (L) verdrehsicher mit dem Stabilisator (2) verbindbar ist.

2. Stabilisatorlager nach Anspruch 1, **dadurch gekennzeichnet, daß** die Innenhülse (3) an mindestens einem Ende (8) einen freien vorstehenden Hülsenabschnitt mit einer polygonalen Innenform als erstes Rastelement (6) aufweist, das einen mit dem Stabilisator (2) verbundenen Ring (9) übergreift, der eine polygonale Außenform als zweites Rastelement (7) aufweist..

3. Stabilisatorlager nach den Ansprüchen 1 oder 2, **dadurch gekennzeichnet, daß** die Rastelemente (6, 7) aus miteinander korrespondierenden Vielzahnprofilen oder Mehrkantprofilen bestehen.

4. Stabilisatorlager nach den Ansprüchen 1, 2 oder 3, **dadurch gekennzeichnet, daß** das elastische Lagerelement (L) zwischen der Innenhülse (3) und einer Außenhülse (4) ein anvulkanisiertes elastisches Ringelement (5) aufweist, das sich zumindest über eine Teillänge der Innenhülse (3) erstreckt.

5. Stabilisatorlager nach einem oder mehreren der vorhergehenden Ansprüche, **dadurch gekennzeichnet, daß** die Außenhülse (4) und/oder die Innenhülse (3) aus wenigstens zwei Schalen (3a, 3b) und/oder (4a, 4b) besteht, wobei die Außenhülse (4) Flanschabstellungen (10, 11) aufweist, welche miteinander verbindbar sind.

6. Stabilisatorlager nach einem oder mehreren der vorhergehenden Ansprüche, **dadurch gekennzeichnet, daß** zwischen der Innenhülse (3) und dem Stabilisator (2) eine elastische Zwischenschicht angeordnet ist.

7. Stabilisatorlager nach einem oder mehreren der vorhergehenden Ansprüche, **dadurch gekennzeichnet, daß** der Ring (9) aus einem Kunststoffmaterial besteht und auf den Stabilisator (2) aufspritzbar ist.

8. Stabilisatorlager nach einem oder mehreren der vorhergehenden Ansprüche, **dadurch gekennzeichnet, daß** der Ring (9) auf den Stabilisator (2) aufpressbar ist.

9. Stabilisatorlager nach einem oder mehreren der vorhergehenden Ansprüche, **dadurch gekennzeichnet, daß** die Innenhülse (3) zylindrisch ausgebildet ist und im Querschnitt eine polygonale Innenform (Rastelement 7) aufweist.

## Claims

1. A stabilizer bearing for a wheel suspension for motor vehicles, with a resilient bearing element which embraces the stabilizer at a bearing point and which is connected to a part of the vehicle body in a fixed manner, wherein the resilient bearing element (**L**) is arranged with an inner sleeve (3) on the stabilizer (2), **characterized in that** the bearing element (**L**) is capable of being connected - in a manner preventing turning - to the stabilizer (2) by way of mutually corresponding catch elements (6, 7) between the inner sleeve (3) and the stabilizer (2).

2. A stabilizer bearing according to Claim 1, **characterized in that** on at least one end (18) the inner sleeve (3) has a free, projecting sleeve portion with a polygonal internal shape as a first catch element (6), which engages over a ring (9) which is connected to the stabilizer (2) and which has a polygonal external shape as a second catch element (7).

3. A stabilizer bearing according to Claims 1 or 2, **characterized in that** the catch elements (6, 7) consist of mutually corresponding multiple-tooth profiles or multiple-corner profiles.

4. A stabilizer bearing according to Claims 1, 2 or 3, **characterized in that** between the inner sleeve (3) and an outer sleeve (4) the resilient bearing element (**L**) has a resilient annular element (5) which is vulcanized on and which extends at least over a portion of the length of the inner sleeve (3).

5. A stabilizer bearing according to one or more of the preceding Claims, **characterized in that** the outer sleeve (4) and/or the inner sleeve (3) consists or consist of at least two shells (3a, 3b) and/or (4a, 4b), wherein the outer sleeve (4) has flange projections (10, 11) which are capable of being connected to each other.

6. A stabilizer bearing according to one or more of the preceding Claims, **characterized in that** a resilient intermediate layer is arranged between the inner sleeve (3) and the stabilizer (2).

7. A stabilizer bearing according to one or more of the preceding Claims, **characterized in that** the ring (9) consists of a plastics material and is capable of being spray-applied to the stabilizer (2).

8. A stabilizer bearing according to one or more of the preceding Claims, **characterized in that** the ring (9) is capable of being pressed onto the stabilizer (2).

9. A stabilizer bearing according to one or more of the preceding Claims, **characterized in that** the inner sleeve (3) is made cylindrical and has a polygonal inner shape (catch element 7) in cross-section.

## Revendications

1. Support de barre de stabilisation d'une suspension de roue de véhicule automobile, avec un élément support élastique qui est relié solidement à une partie de la caisse, entourant la barre stabilisatrice à un emplacement du support, l'élément support élastique (L) étant disposé avec une douille intérieure (3) sur la barre stabilisatrice (2), **caractérisé en ce que** l'élément support (L) peut être relié de manière solidaire en rotation à la barre stabilisatrice (2), à l'aide d'éléments d'encliquetage correspondants (6, 7) entre la douille intérieure (3) et la barre stabilisatrice (2).

2. Support de barre de stabilisation selon la revendication 1, **caractérisé en ce que** la douille intérieure (3) présente à une extrémité (8) au moins, un tronçon de douille libre saillant avec une forme intérieure polygonale, comme premier élément d'encliquetage (6), qui recouvre une bague (9) reliée à la barre stabilisatrice (2), présentant comme deuxième élément d'encliquetage (7) une forme extérieure polygonale.

3. Support de barre de stabilisation selon l'une quelconque des revendications 1 ou 2, **caractérisé en ce que** les éléments d'encliquetage (6, 7) sont constitués de profilés à dents multiples ou de profilés polygonaux correspondants entre eux.

4. Support de barre de stabilisation selon l'une quelconque des revendications 1, 2 ou 3, **caractérisé en ce qu'**entre la douille intérieure (3) et une douille extérieure (4), l'élément support élastique(L) présente un élément annulaire élastique (5) vulcanisé sur celui-ci, qui s'étend sur une partie de la longueur de la douille intérieure (3).

5. Support de barre de stabilisation selon l'une quelconque des revendications précédentes, **caractérisé en ce que** la douille extérieure (4) et/ou la douille intérieure (3) sont constituées au moins de deux coques (3a ,3b) et/ou (4a, 4b), la douille extérieure (4) présentant des pattes (10, 11) à l'aide desquelles elles peuvent être reliées ensemble.

6. Support de barre de stabilisation selon l'une quelconque des revendications précédentes, **caractérisé en ce qu'**une couche élastique intermédiaire est disposée entre la douille intérieure (3) et la barre stabilisatrice (2).

7. Support de barre de stabilisation selon l'une quelconque des revendications précédentes, **caractérisé en ce que** la bague (9) est constituée d'un matériau plastique et peut être injectée sur la barre stabilisatrice (2).

8. Support de barre de stabilisation selon l'une quelconque des revendications précédentes, **caractérisé en ce que** la bague (9) peut être emmanchée à force sur la barre stabilisatrice (2).

9. Support de barre de stabilisation selon l'une quelconque des revendications précédentes, **caractérisé en ce que** la douille intérieure (3) est de forme cylindrique et comporte une forme intérieure de section polygonale (élément d'encliquetage 7).
